# EUROPÄISCHE PATENTANMELDUNG

(11) **EP 1 213 188 A2**
(43) Veröffentlichungstag der Anmeldung: **12.06.2002**
(21) Anmeldenummer: 01129058.2
(22) Anmeldetag: 07.12.2001
(51) Int. Cl.: B60R 16/00, H01H 13/00

(54) **Bedienvorrichtung**

(30) Priorität: 11.12.2000 DE 10061619
(71) Anmelder: ROBERT BOSCH GMBH, 70442 Stuttgart (DE)
(72) Erfinder: Hudel, Peter, 61169 Friedberg (DE); Jung, Thomas, 60314 Frankfurt (DE); Schreiner, Jörg, 81667 München (DE)

(57) **Zusammenfassung**

Es wird eine Bedienungsvorrichtung vorgeschlagen, mit der eine vorteilhafte Bedienung verschiedener Geräte (10,13) und/oder Gerätefunktionen (11,12,13,14) möglich ist, indem ein Benutzer eine taktile Rückkopplung durch mittels Gegenkräfte simulierter, verschiedener Bedienelemente (2) erhält, die durch einzelnen Geräten und/oder Gerätefunktionen zugeordnete Ansteuerungsvorschriften dargestellt werden. Für verschiedene zu verwendende Bedienfelder sind jeweils Ansteuerungsvorschriften in Abhängigkeit von der Art eines Bedienfeldes speicherbar.

## Beschreibung

### Stand der Technik

Die Erfindung geht aus von einer Bedienvorrichtung nach der Gattung des Hauptanspruchs. Es sind schon Geräte, insbesondere in einem Kraftfahrzeug bekannt, bei denen jeweils an dem Gerät mechanische Bedienkomponenten angeordnet sind, die jeweils Gerätefunktionen der einzelnen Geräte zugeordnet sind. Dies sind z.B. Dreh- oder Schieberegler für eine Klimasteuerung, Dreh- oder Schieberegler für die Steuerung eines Audiogeräts, z.B. für eine Sendereinstellung oder eine Lautstärkeregelung, sowie Drucktasten z.B. für die Eingabe eines Fahrziels in eine Navigationsvorrichtung. Durch das Erfühlen des einzelnen Bedienelements erhält ein Benutzer eine Rückkopplung darüber, welches Gerät er gerade betätigt. Aus der DE 198 21 899 A1 ist ein Zündanlassschalter bekannt, bei dem in dem Zündanlassschalter eine Rückstelleinrichtung angeordnet ist, die in Abhängigkeit von Funktionszuständen eines Steuergeräts beziehungsweise des Fahrzeugs Rückstellkräfte auf einen Schlüssel in einem Schloss des Zündanlassschalters ausübt. Die Variation der Rückstellkraft auf den Zündanlassschalter ist dabei auf die Funktion der Zündung des Fahrzeugs beschränkt. Andere Geräte beziehungsweise Funktionen des Fahrzeugs sind über den Zündanlassschalter weder steuerbar, noch ist die Rückstellkraft von anderen Gerätefunktionen oder anderen, zu bedienenden Geräten abhängig.

### Vorteile der Erfindung

Die erfindungsgemäße Bedienvorrichtung mit den Merkmalen des Hauptanspruchs hat demgegenüber den Vorteil, dass ein Benutzer durch unterschiedliche Kräfte, die auf eine Bedieneinheit der Bedienvorrichtung wirken, und die der Benutzer bei seiner Bedienung erfühlt, eine haptische Rückkopplung darüber erhält, welches Gerät beziehungsweise welche Gerätefunktion der Benutzer gerade bedient. Einerseits ist hierbei nur eine erfindungsgemäße Bedienvorrichtung für eine Vielzahl von Geräten beziehungsweise Gerätefunktionen erforderlich, ohne dass andererseits ein Benutzer - z.B. über die Darstellung in einer Anzeige - optisch kontrollieren muss, welches Gerät beziehungsweise welche Gerätefunktion der Bedienvorrichtung zur Zeit zugewiesen ist und damit beeinflusst werden kann. Dies ist insbesondere in Bereichen von Vorteil, in denen eine Ablenkung des Benutzers minimiert werden soll, z.B. bei der Steuerung von Fahrzeugen. Durch die Zuordnung verschiedener Geräte und/oder Gerätefunktionen zu einzelnen vorzugsweise unterschiedlichen Ansteuerungsvorschriften, nach denen das Bedienelement während einer Steuerung des jeweiligen Geräts bzw. der jeweiligen Gerätefunktion angesteuert wird, ermöglicht dabei einerseits verschiedenartige Bedienmöglichkeiten und andererseits einen flexiblen Wechsel bzw. eine individuelle Zuordnung einzelner Funktionen zu einer jeweiligen Bedienweise. Auch die Betätigung des Bedienelements löst einen fühlbaren Reiz aus. Dieser Reiz kann dem Bediener spezifische Informationen über den Funktionszustand des Bedienelements oder der durch das Bedienelement ausgelösten Funktion vermitteln.

Durch die in den Unteransprüchen aufgeführten Maßnahmen sind vorteilhafte Weiterbildungen und Verbesserungen der im Hauptanspruch angegebenen Bedienvorrichtung möglich. Besonders vorteilhaft ist, die auf ein Bedienelement der Bedienvorrichtung wirkende Kraft in Abhängigkeit von einem Betriebszustand eines Geräts zu wählen, so dass ein Benutzer auch eine haptische Rückkopplung über den Betriebszustand des entsprechenden Geräts erhält, ohne dass er optisch den Betriebszustand kontrollieren muss. Hierdurch ist es z.B. möglich, anhand der Stellung des Bedienelements zu erfühlen, ob ein Gerät eingeschaltet oder ausgeschaltet ist, indem eine Stellung des Bedienelements durch eine auf das Bedienelement gerichtete Kraftwirkung in einer vorgegebenen Lage für den Zustand "ein" oder für den Zustand "aus" entsprechend fixiert wird.

Weiterhin ist vorteilhaft, dass eine auf das Bedienelement ausgeübte Kraft beziehungsweise eine Bewegung des Bedienelements messbar ist. Hierdurch kann die auf das Bedienelement wirkende Kraft in Abhängigkeit von der Kraft eines Benutzers gewählt werden, so dass bei einer verstärkten Kraftwirkung auf ein Bedienelement in eine nicht zulässige Richtung auch die Kraftwirkung auf das Bedienelement bis zu einer vorgebbaren Grenze verstärkt wird, so dass auch bei einem Benutzer, der mehr Kraft auf die Bedienelemente ausübt als ein anderer Benutzer, die entsprechende haptische Rückkopplung gegeben wird. Andererseits wird für einen Benutzer, der nur wenig Kraft für die Bedienung aufwendet die entsprechende Gegenkraft angepasst.

Weiterhin ist vorteilhaft, dass bei einer Überschreitung einer vorgegebenen äußeren Krafteinwirkung auf das Bedienelement eine Warnung ausgegeben wird, so dass ein Benutzer eine Information darüber erhält, dass er durch eine weitere Krafteinwirkung das Bedienelement möglicherweise beschädigt und ihm insbesondere angezeigt wird, dass er eine Funktion beziehungsweise einen Funktionswert, welche(r) eingestellt werden soll, nicht einstellbar ist.

Weiterhin ist vorteilhaft, dass eine ausgehend von der Ansteuervorrichtung auf das Bedienelement wirkende Kraft gegen eine äußere auf das Bedienelement wirkende Kraft gerichtet ist, so dass hierdurch z.B. ein Anschlag realisiert werden kann, indem bei Erreichen eines vorgegebenen Wertes die durch die Ansteuervorrichtung auf das Bedienelement wirkende Kraft genauso groß gewählt wird, dass sie die von einem Benutzer auf das Bedienelement ausgeübte Kraft kompensiert, so dass das Bedienelement bei einem Erreichen des Anschlags und bei einer Bewegung des Bedienelements gegen diesen simulierten Anschlag durch die auf das Bedienelement wirkende Kraft das Bedienelement gegen eine weitere Bewegung in der bisherigen Richtung fixiert wird.

Weiterhin ist vorteilhaft, dass der Bedienvorrichtung eine Anzeige zugeordnet ist, in der über das Bedienelement einem Benutzer für die Bedienvorrichtung auswählbare Funktionen in der Anzeige zusätzlich zu der vorhandenen taktilen Rückkopplung dargestellt werden.

Weiterhin ist vorteilhaft, dass in der Anzeige ein Steuerelement dargestellt ist und dass die auf das Bedienelement wirkende Kraft abhängig von dem Steuerelement gewählt ist, da durch die auf das Bedienelement wirkende Kraft ein Benutzer eine gute Rückkopplung für die Bedienung des dargestellten Steuerelements erhält und er, falls dies erforderlich ist, seine Eingabe durch die optische Anzeige zusätzlich kontrollieren kann.

Weiterhin ist vorteilhaft, dass durch die auf das Bedienelement wirkende Kraft ein Kippschalter, ein Schiebeschalter und/oder ein Drehschalter realisierbar ist, da dies bekannte Schaltelemente sind, die ein Benutzer kennt und die daher eine einfache Bedienung ermöglichen.

Weiterhin ist vorteilhaft, dass die auf das Bedienelement wirkende Kraft so gewählt ist, dass eine Anzeigemarke nicht über den Rand eines Bedienfelds heraus bewegt werden kann. Hierdurch erhält ein Benutzer auch eine taktile Rückkopplung über das Bedienfeld. In bevorzugter Weise können einzelne Bedienfelder an ihren Rändern über schwache Gegenkräfte gegen eine Bewegung einer Anzeigemarke über den Rand eines Bedienfeldes hinaus verfügen, so dass Raststufen zwischen einzelnen Bedienfeldern durch die Bedienvorrichtung realisierbar sind.

Weiterhin ist vorteilhaft, dass die für die Bedienung des Bedienelements erforderlichen Kräfte in der Ansteuervorrichtung berechenbar oder in die Ansteuervorrichtung übertragbar sind, so dass auch nach Einbau der Bedienvorrichtung z.B. in ein Fahrzeug neue Geräte angeschlossen oder neue Gerätefunktionen programmiert werden können, die dennoch eine Bedienung über die erfindungsgemäße Bedienvorrichtung ermöglichen, indem die wirkenden Kräfte neu berechnet beziehungsweise der Ansteuervorrichtung übertragen werden können.

Weiterhin ist vorteilhaft, dass das Bedienelement zumindest teilweise kugelförmig ausgebildet ist, da mit einem kugelförmigen Element eine zweidimensionale Auswahl möglich ist, während bei einer Einschränkung der Bewegungsrichtung durch eine entsprechende Kraftwirkung auch eindimensionale Auswahlen mittels des kugelförmigen Bedienelements möglich sind.

Weiterhin ist vorteilhaft, dass die Beweglichkeit des Bedienelements mechanisch begrenzt wird. Vorzugsweise geschieht dies durch Ansetzen eines Stiftes an ein Bedienelement, der zugleich als Zentrierstift dient und durch seine Anordnung an der Oberfläche des Bedienelements einem Benutzer eine Rückmeldung über eine Position des Bedienelements geben kann.

Weiterhin ist vorteilhaft, dass das Bedienelement bei einer Funktion des Geräts automatisch bewegt wird, vorzugsweise in schnell wechselnder Richtung. Durch ein derartiges Rütteln des Bedienelements erhält ein Benutzer eine Rückmeldung über eine Fehlfunktion oder über eine Fehlbedienung der Bedienvorrichtung als eine taktile Rückkopplung, ohne dass er auf optische beziehungsweise akustische Warnungen angewiesen ist.

Weiterhin ist vorteilhaft, dass das Bedienelement automatisch in eine vorgebbare Stellung bringbar ist, da hierdurch einem Benutzer zugleich eine taktile Rückkopplung über den Betriebszustand eines Geräts oder den Zustand einer Gerätefunktion gegeben werden kann.

Weiterhin ist vorteilhaft, an einem elektrischen Gerät mit einer erfindungsgemäßen Bedienvorrichtung zusätzliche Drucktasten anzubringen, die eine Vorauswahl für einzelne Geräte ermöglichen. Hierdurch kann sichergestellt werden, dass zumindest die Hauptfunktionen durch einzelne Drucktasten auswählbar sind, während die Geräte selbst und die den Geräten zugeordneten Gerätefunktionen jeweils durch die erfindungsgemäße Bedienvorrichtung bedienbar sind.

### Zeichnung

Ausführungsbeispiele der Erfindung sind in der Zeichnung dargestellt und in der nachfolgenden Beschreibung näher erläutert. Es zeigen Figur 1 eine erfindungsgemäße Bedienvorrichtung zur Verwendung in einem Kraftfahrzeug, Figur 2 einen erfindungsgemäßen Verfahrensablauf bei der Bedienung der erfindungsgemäßen Bedienvorrichtung. Figur 3a zeigt eine Anzeigendarstellung für einen Betrieb einer erfindungsgemäßen Bedienungsvorrichtung als ein Schieberegler, Figur 3b zeigt die erfindungsgemäße Bedienvorrichtung bei dem Betrieb als Schieberegler, Figuren 3c und 3d zeigen Beispiele für einen Verlauf der auf das Bedienelement wirkenden Kraft in Abhängigkeit von der Positionierung des Bedienungselements für eine Ansteuerung als Schieberegler. Figur 4a zeigt ein weiteres Ausführungsbeispiel für die Anzeige bei einem erfindungsgemäßen Betrieb mit einer zweidimensionalen Funktionsauswahl, Figur 4b eine zweidimensionale Auswahl mit einer erweiterten Auswahlmöglichkeit und die Figuren 4c und 4d die ortsabhängige Kraftwirkung auf das Bedienelement entlang der Linie IV in der Figur 4a. Die Figuren 5a und 5b zeigen ein Ausführungsbeispiel für die Realisierung verschiedener Drehschalter, Figur 6 zeigt ein Ausführungsbeispiel für einen Kippschalter, Figur 7 zeigt ein Ausführungsbeispiel für die Realisierung einer erfindungsgemäßen Bedienvorrichtung mit einem kugelförmigen Bedienelement.

### Beschreibung des Ausführungsbeispiels

Die erfindungsgemäße Bedienvorrichtung kann zur Steuerung einer Vielzahl von Geräten beziehungsweise Gerätefunktionen insbesondere dann verwendet werden, wenn eine Aufmerksamkeit eines Benutzers für eine optische Kontrolle nur begrenzt zur Verfügung steht, z.B. für den Fall, dass ein Benutzer einen Fertigungsprozess bei einer Fertigungsmaschine oder das umgebende Verkehrsgeschehen bei einem Fahrzeug beachten muss. Ferner ermöglicht eine erfindungsgemäße Bedienvorrichtung auch Benutzern mit eingeschränkter Sehkraft infolge der taktilen Rückkopplung eine Steuerung einer Vielzahl von Geräten beziehungsweise Gerätefunktionen, da eine optische Rückkopplung für ein Erkennen des Geräts bzw. der Gerätefunktion nicht oder nur eingeschränkt notwendig ist.

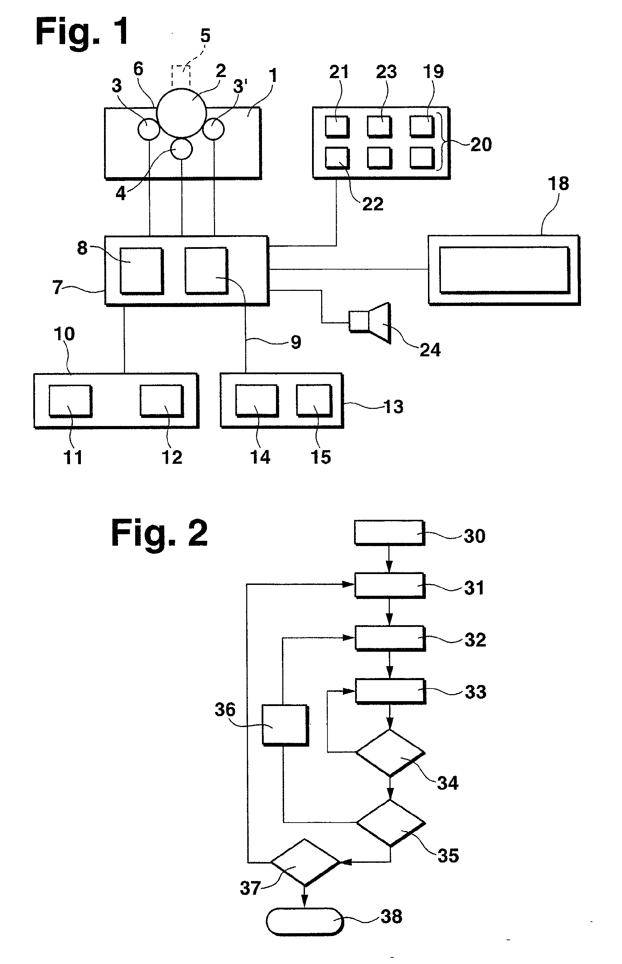

In der Figur 1 ist eine erfindungsgemäße Bedienvorrichtung für die Verwendung in einem Kraftfahrzeug dargestellt. Die Bedienvorrichtung wird gebildet aus der Halterung 1 mit dem Bedienelement 2, der Bedieneinheit 19, der Ansteuervorrichtung 7 und der Anzeige 18. In der Halterung 1 ist das Bedienelement 2 gelagert, das über Aktoren 3, 3` ansteuerbar ist, indem über die Aktoren 3, 3` auf das Bedienelement 2 Kräfte ausübbar sind. In einem bevorzugten Ausführungsbeispiel ist für jede mögliche Bewegungsachse des Bedienelements 2 zumindest ein Aktor 3, 3` in der Halterung 1 angeordnet. Ferner ist an dem Bedienelement 2 mindestens ein Messelement 4 für die Bestimmung einer Position des Bedienelements 2 angeordnet. An dem Bedienelement 2 ist in einem weiteren Ausführungsbeispiel ein Stift 5 angeordnet, der hier gestrichelt dargestellt ist und der die Beweglichkeit des Bedienelements 2 dadurch beschränkt, dass der Stift 5 nur bis zu einer Oberfläche 6 der Halterung bewegbar ist. Die Aktoren 3, 3` und das Messelement 4 sind mit der Ansteuervorrichtung 7 verbunden, die über eine Recheneinheit 8 und einen Speicher 9 verfügt. Die Ansteuervorrichtung 7 ist ferner mit einem ersten Gerät 10, das zumindest über eine erste Gerätefunktion 11 und eine zweite Gerätefunktion 12 verfügt, und mit einem zweiten Gerät 13 verbunden, das zumindest über eine erste Gerätefunktion 14 und eine zweite Gerätefunktion 15 verfügt. Ferner ist die Ansteuervorrichtung 7 mit einer Anzeige 18 und einer Bedieneinheit 19 verbunden. An der Bedieneinheit 19 sind Drucktasten 20 angeordnet, wobei eine erste Taste 21 dem ersten Gerät 10 und eine zweite Taste 22 dem zweiten Gerät 13 zugeordnet sind. Eine dritte Taste 23 dient zur Bestätigung einer mittels des Bedienelements 2 ausgewählten Funktion. Die Ansteuervorrichtung 7 ist mit einem Lautsprecher 24 verbunden, die bei einer zu starken, auf das Bedienelement 2 wirkenden Kraft, einen Warnton ausgibt. Hierdurch wird ein Benutzer darüber informiert, dass er das Bedienelement 2 entgegen der in dem Speicher 9 abgelegten Ansteuerungsvorschrift bewegen will und möglicherweise durch diese Bewegung das Bedienelement 2 beschädigen könnte.

Die Halterung 1 ist vorzugsweise in einer für einen Fahrer des Kraftfahrzeugs gut zu erreichenden Position angeordnet, z.B. in der Mittelkonsole des Fahrzeugs. Dies erleichtert auch eine Bedienung des Bedienelements 2 durch einen Beifahrer. Die Oberfläche 6 der Halterung 1 ist in einem bevorzugten Ausführungsbeispiel Teil einer Verkleidung der Mittelkonsole beziehungsweise der Instrumententafel des Fahrzeugs. Die Anzeige 18 ist in einem ersten Ausführungsbeispiel eine in der Mittelkonsole des Fahrzeugs angeordnete graphische Anzeige, z.B. eine Flüssigkristallanzeige. In einem weiteren Ausführungsbeispiel ist die Anzeige 18 als ein in einem Anzeigeinstrument des Fahrzeugs angeordnetes Anzeigefeld ausgeführt, das auch z.B. zur Anzeige der Fahrzeuggeschwindigkeit oder der Motordrehzahl dient. Das Bedienelement 2 ist in der Ausführung ohne den Stift 5 in alle Richtungen, also zweidimensional, bewegbar. Auch mit dem Stift 5 ist das Bedienelement 2 in alle Richtungen beliebig drehbar, wobei die Oberfläche 6 die Bewegungsfreiheit des Bedienelements 2 jedoch einschränkt.

Die Aktoren 3, 3' wirken in einem bevorzugten Ausführungsbeispiel über Hafträder auf das Bedienelement 2. Das Messelement 4 kann in einem ersten Ausführungsbeispiel ebenfalls als ein Haftrad ausgeführt sein, das durch einen Kontakt zu dem Bedienelement 2 eine Positionsbeziehungsweise Bewegungsbestimmung des Bedienelements 2 ermöglicht. In einem weiteren Ausführungsbeispiel ist das Messelement 4 als ein optisches Messelement ausgeführt, das mittels einer optischen Messung vorzugsweise eines Aufdrucks, z.B. eines Rasterdrucks auf dem Bedienelement 2, eine Positionsbestimmung des Bedienelements 2 ermöglicht. Die Aktoren 3, 3' sind sowohl als Elektromotoren, als auch als elektrische Bremsen, z.B. Wirbelstrombremsen ausgeführt. Eine Messung der Kraft, die durch einen Benutzer auf das Bedienelement 2 ausgeübt wird, ist dabei in der Weise möglich, dass der Recheneinheit 8 der Ansteuervorrichtung 7 einerseits die auf die Aktoren 3, 3` gegebene Leistung und die damit auf das Bedienelement 2 wirkende Kraft bekannt ist. Andererseits ist der Recheneinheit 8 auch die Position beziehungsweise die Bewegung des Bedienelements 2 durch die Messung des Messelements 4 bekannt. Aus der Differenz der mittels der Aktoren 3, 3` auf das Bedienelement 2 wirkenden Kraft und der tatsächlich mittels des Messelements 4 festgestellten Bewegung des Bedienelements 2 kann die Recheneinheit 8 die durch einen Benutzer auf das Bedienelement 2 wirkende Kraft ermitteln. In dem Speicher 9 sind für die an die Ansteuervorrichtung 7 angeschlossenen Geräte bzw. für die einzelnen Gerätefunktionen dieser Geräte Ansteuerungsvorschriften für das Bedienelement 2 gespeichert. Durch die Ansteuerungsvorschriften ist jeweils den Stellungen des Bedienelements ein Parameter oder eine Funktion des Geräts und/oder der Gerätefunktion zugeordnet. Ferner ist in der Ansteuerungsvorschrift festgelegt, welche Kräfte durch die Aktoren 3, 3' auf das Bedienelement abhängig von der Stellung des Bedienelements ausgeübt werden sollen, so dass für einen Benutzer bei unterschiedlichen Ansteuerungsvorschriften nicht nur unterschiedliche Parameter und Funktionen einstellbar sind, sondern insbesondere eine andere haptische Rückkopplung bei einer Betätigung des Bedienelements 2 erfolgt. Ferner sind in dem Speicher 9 die zu den einzelnen Gerätefunktionen gehörenden graphischen Darstellungen von Bedienoberflächen gespeichert, die bei der Auswahl des entsprechenden Geräts beziehungsweise der entsprechenden Gerätefunktion in der Anzeige 18 dargestellt werden und auf die jeweils zugehörige Ansteuerungsvorschrift für das Bedienelement 2 angepasst ist.

In dem hier gewählten Ausführungsbeispiel ist das erste elektrische Gerät 10 ein Autoradio und das zweite elektrische Gerät 13 eine Navigationsvorrichtung. Die erste Gerätefunktion 11 des Autoradios 10 ist eine Lautstärkenregelung und die zweite Gerätefunktion 12 ist die Auswahl eines gespeicherten Senders. Die Funktionen des Navigationssystems 13 sind z.B. die Zieleingabe oder eine Fahrtroutenauswahl. Weitere elektrische Geräte, z.B. ein CD-Spieler, eine Klimaregelung oder ein Autotelefon sind an die Ansteuervorrichtung 7 anschließbar, jedoch in der Figur 1 nicht dargestellt. Mit der ersten Taste 21 wird das Bedienelement 2 auf eine Steuerung des Autoradios 10 geschaltet. Mit einem Druck auf die zweite Taste 22 wird das Bedienelement 2 auf eine Bedienung des Navigationssystems 13 geschaltet. Mit der dritten Taste 23 wird eine mit dem Bedienelement 2 getroffene Auswahl einer Gerätefunktion in der Anzeige 18 bestätigt. Die über die Drucktasten 20 ansteuerbaren Funktionen sind in einem weiteren Ausführungsbeispiel auch durch eine direkte Ansteuerung der einzelnen Funktionen mittels des Bedienelements 2 möglich.

In der Figur 2 ist ein erfindungsgemäßer Verfahrensablauf zur Steuerung von Gerätefunktionen mittels der in Figur 1 beschriebenen Bedienvorrichtung dargestellt. In einem Ruhezustand der über die Bedienvorrichtung bedienbaren elektrischen Geräte ist das Bedienelement 2 in einem bevorzugten Ausführungsbeispiel durch die Aktoren in einer ersten Position fixiert. Nur durch eine Kraftwirkung in einer vorgegebenen Richtung, in der ein Bedienungswiderstand geringer ist als in allen anderen Richtungen, ist das Bedienelement 2 in eine zweite Position bewegbar. Damit ist durch das Bedienelement 2 ein Kippschalter zum Einschalten der erfindungsgemäßen Bedienungsvorrichtung realisiert. Mit einer entsprechenden Bedienung des Bedienelements 2, also mit einem Umschalten des Kippschalters, wird in einem Einschaltschritt 30 ein erfindungsgemäßer Betrieb der Bedienvorrichtung eingeleitet. In einem anschließenden Einrichtungsschritt 31 wird aus dem Speicher 9 für eine vorgegebene Funktion des zu bedienenden Geräts eine Ansteuerungvorschrift für das Bedienelement 2 geladen. Die nun bestimmte Lage des Bedienelements 2 wird als eine Nullage festgelegt, relativ zu der für jede Position des Bedienelements 2 Kräfte gespeichert sind, die einer auf das Bedienelement in dieser Position von außen wirkenden Kraft entgegenzusetzen sind. In einem anschließenden Bestimmungsschritt 32 wird die Position des Bedienelements relativ zu der Nullage ermittelt und das Bedienelement 2 wird mit geringer Kraftwirkung der Aktoren 3, 3` an dieser Position fixiert. Sobald über das Messelement 4 eine geringe Verschiebung des Bedienelements 2 aus dieser fixierten Lage ermittelt wird, wird in einem Ermittlungsschritt 33 in Abhängigkeit von der zuvor ermittelten Position eine auf das Bedienelement 2 wirkende, positionsabhängige Gegenkraft ausgeübt. In einem anschließenden ersten Prüfschritt 34 wird zunächst geprüft, ob die Position des Bedienelements 2 sich verändert hat. Ist dies nicht der Fall, so wird zu dem Ermittlungsschritt 33 zurückverzweigt, so dass bei einer erneuten Krafteinwirkung auf das Bedienelement 2 eine erneute Gegenkraft auf das Bedienelement 2 übertragen werden kann. Wird in dem ersten Prüfschritt 34 festgestellt, dass sich die Position des Bedienelements 2 verändert hat, so wird in einem zweiten Prüfschritt 35 überprüft, ob durch die nunmehr gewählte Position des Bedienelements 2 eine neue Ansteuerungsvorschrift zu wählen ist, z.B. durch die Anwahl eines Untermenüs, einer anderen Gerätefunktion oder eines anderen Geräts. Ist dies nicht der Fall, so wird von dem zweiten Prüfschritt 35 zu einem Auswahlschritt 36 verzweigt, in dem gegebenenfalls andere, mittels dem Bedienelement 2 ausgewählte Funktionen des Geräts ausgeführt werden, z.B. eine Senderauswahl, eine Lautstärkenregelung, eine Fahrzieleingabe oder eine Fahrtroutenauswahl. Ferner wird in dem Auswahlschritt 36 die Anzeige 18, falls erforderlich, entsprechend angepasst, indem eine in der Anzeige dargestellte Anzeigemarke entsprechend der nunmehr ermittelten Position des Bedienelements 2 verschoben wird. Danach wird von dem Auswahlschritt 36 zu dem Bestimmungsschritt 32 zurückverzweigt. Wird in dem zweiten Prüfungsschritt 35 jedoch festgestellt, dass eine neue Ansteuerungvorschrift verwendet werden muss, so wird zu einem dritten Prüfschritt 37 weiterverzweigt. In dem dritten Prüfschritt 37 wird geprüft, ob eine Abschaltung der Bedienvorrichtung gewünscht ist. Ist dies der Fall, so wird zu dem Endschritt 38 weiterverzweigt, indem die Kippschalterfunktion wieder aktiviert wird und das Bedienelement 2 durch die Aktoren 3, 3' in eine Ausgangsstellung gebracht wird, die ein erneutes Einschalten ermöglicht, wie es zu dem Einschaltschritt 30 beschrieben ist. Wird in dem dritten Prüfschritt 37 festgestellt, dass eine andere Ansteuerungsvorschrift für das Bedienelement 2 gewünscht wird, so wird diese Ansteuerungsvorschrift aus dem Speicher 9 durch die Recheneinheit 8 geladen und mit dem Einrichtungsschritt 31 wird das Bedienelement 2 entsprechend angesteuert. Ist der Stift 5 an dem Bedienelement 2 angeordnet, so wird in dem Einrichtungsschritt 31 das Bedienelement 2 ausgerichtet, so dass der Stift 5 in eine vorgegebene Stellung gemäß der Ansteuerungsvorschrift bewegt wird, z.B. in ein Zentrum der durch die Oberfläche 6 gebildeten Öffnung.

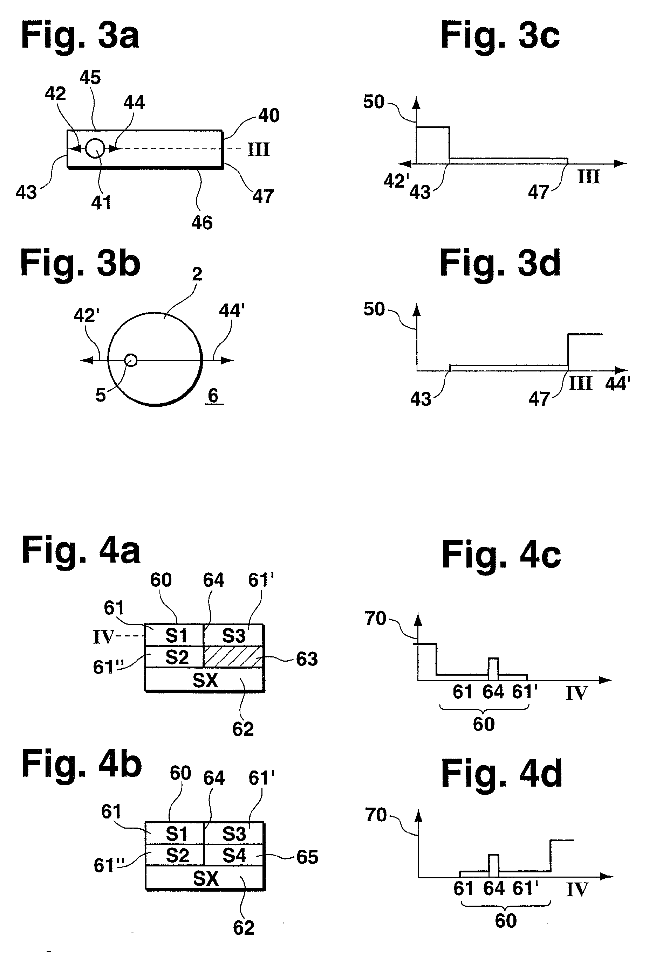

In der Figur 3a ist ein Rahmen 40 dargestellt, der in der Anzeige 18 angezeigt wird. In dem Rahmen 40 ist eine Anzeigemarke 41 dargestellt, die innerhalb des Rahmens 40 in eine erste, durch einen ersten Pfeil 42 dargestellte Richtung auf einen ersten Rand 43 und in eine zweite Richtung auf einen zweiten Rand 47 bewegt werden kann, wobei die zweite Richtung durch einen zweiten Pfeil 44 dargestellt wird und der ersten Richtung entgegengesetzt ist. Die Anzeigemarke kann nicht in Richtung eines dritten Randes 45 und eines vierten Randes 46 bewegt werden, die beide parallel zu den Bewegungsrichtungen gemäß der Pfeile 42, 44 verlaufen. Der in der Figur 3a beschriebene Rahmen 40 ist für die Einstellung linear steuerbarer Größen geeignet, z.B. der Lautstärke eines Autoradios 10 und simuliert damit einen Schieberegler.

In der Figur 3b ist das Bedienelement 2 mit dem Stift 5 dargestellt, wobei das Bedienelement 2 mittels des Stifts 5 entweder in die erste Richtung, gekennzeichnet durch einen ersten Pfeil 42` oder in die zweite, entgegengesetzte Richtung gemäß einem zweiten Pfeil 44` bewegbar ist. Eine Bewegung in andere Richtungen wird durch die Aktoren 3, 3` gesperrt, indem entsprechend eine Kraft entgegen einer solchen Bewegungsrichtung wirkt. Wird das Bedienelement mittels des Stifts 5 in eine der Richtungen der Pfeile 42`, 44` bewegt, so wird auch die Anzeigemarke 41 in dem Rahmen 40 in die jeweils entsprechende Richtung der Pfeile 42, 44 bewegt. Die Lautstärke des Autoradios nimmt ausgehend von einer minimalen Lautstärke, wenn sich die Anzeigemarke 41 an dem ersten Rand 43 befindet, bis zu einer maximalen Lautstärke mit zunehmenden Abstand von dem ersten Rand 43 zu, bis die maximale Lautstärke bei einem Erreichen des zweiten Randes 47 erreicht wird. Wird in dem Auswahlschritt 36 das Bedienelement 2 für die Steuerung der Lautstärke des Autoradios geschaltet, so fährt das Bedienelement 2 mit dem Stift 5 eine Position an, die der Position der Anzeigemarke 41 in dem Rahmen 40 entspricht. Befindet sich also, wie in der Figur 3a dargestellt, die Anzeigemarke 41 in der Nähe des ersten Randes 43, so befindet sich auch der Stift 5 in der Richtung 42` in der Nähe des Randes der Oberfläche 6 der Halterung 1. Eine mechanische Begrenzung ist in dieser und in der entgegengesetzten Richtung durch einen Kontakt des Stiftes 5 mit der Oberfläche 6 gegeben. In alle anderen Richtungen ist mittels der Aktoren 3, 3` eine Begrenzung in der Weise realisiert, dass eine Kraft in diese Richtungen mittels einer durch die Aktoren 3, 3` erzeugten Gegenkraft ausgeglichen wird.

In den Figuren Figur 3c und 3d ist ein Beispiel für eine Ansteuerungsvorschrift gegeben, die der Darstellung in der Figur 4a und einem Betrieb des Bedienelements 2 als ein Schieberegler zugeordnet ist. In der Ansteuerungsvorschrift, die vorzugsweise in dem Speicher 9 abgelegt ist, sind die Kräfte gespeichert, die gegen eine äußere, auf das Bedienelement 2 wirkende Kraft von den Aktoren 3, 3' auf das Bedienelement 2 ausgeübt werden. Für den Fall, dass an dem Bedienelement 2 kein Stift 5 angeordnet ist, ist in den Figuren 3c und 3d jeweils auf einer y-Achse 50 die gegen eine äußere auf das Bedienelement 2 gerichtete Kraft über einer Position der Anzeigemarke 41 aufgetragen. In der Figur 3c ist die Kraft für eine Bewegung in der durch den ersten Pfeil 42 gegebene Richtung und in der Figur 3d für eine Bewegung in der durch den zweiten Pfeil 44 gegebene Richtung dargestellt. Befindet sich die Anzeigemarke in dem durch den ersten Rand 43 und den zweiten Rand 47 gegebenen Bereich, so wird in beiden Fällen gegen eine äußere Bewegung nur eine geringe Kraft ausgeübt, die das Bedienelement 2 stabilisiert, z.B. gegen Erschütterungen der Bedienvorrichtung, so dass sich das Bedienelement 2 nicht ohne eine Benutzerbetätigung verstellen kann. In der Figur 3c ist dargestellt, dass bei einer Bewegung in Richtung des ersten Pfeils 42 bei einer Überschreitung des ersten Randes 43 eine starke Kraft entgegen der Bewegungsrichtung ausgeübt wird, so dass ein Benutzer merkt, dass er die erlaubte Grenze überschreitet bzw. überschritten hat. In der Figur 3d ist dargestellt, dass bei einer Bewegung in Richtung des zweiten Pfeils 44 und einer Überschreitung des zweiten Randes 47 ebenfalls eine starke Gegenkraft gegen eine weitere Bewegung in Richtung des zweiten Pfeils 44 ausgeübt wird. Einer Bewegung in Richtung des für die Anzeigemarke erlaubten Bereichs zwischen dem ersten Rand 43 und dem zweiten Rand 47 wird in beiden Fällen nicht entgegengewirkt. In einem bevorzugten Ausführungsbeispiel erfolgt eine automatische Rückstellung des Bedienelements 2, so dass das Bedienelement wieder einer Position der Anzeigemarke 41 in dem Rahmen 40 zugeordnet werden kann. Die in der Figur 3c und 3d dargestellten Kraftwerte für eine Gegenkraft sind vorzugsweise für jede Koordinate der Einstellung des Bedienelements 2 gegenüber der zuvor festgelegten Nullage des Bedienelements 2 gespeichert. Bei einer Bewegung über flächige Bedienfelder sind diese Daten vorzugsweise für kartesische Koordinaten abgelegt, wobei eine Gegenkraft für zwei senkrecht zueinander stehende Richtungen mit der jeweils zusammen mit der Gegenrichtung in der Ansteuerungsvorschrift festgelegt ist. Bei Drehbewegungen sind die Daten für Gegenkräfte vorzugsweise in radialen Koordinaten gespeichert.

In der Figur 4a ist ein weiteres Ausführungsbeispiel für eine Funktionsweise einer erfindungsgemäßen Bedienungsvorrichtung dargestellt, bei dem eine Auswahl einer Funktion über die eines Teilfeldes in einem zweidimensionalen Bedienfeld 60 dargestellt ist. Das Bedienfeld 60 weist drei Teilfelder 61, 61`, 61`` auf, die als Senderstationstasten zur Auswahl eines Radiosenders dienen und die mit Stationsnamen S1, S2, S3 beschriftet sind. Ferner ist in dem Bedienfeld 60 ein Suchfeld 62 mit der Beschriftung Sx angeordnet, das dem Suchen eines neuen Radiosenders dient. Ein Leerfeld 63 ist dunkel dargestellt, da über dieses Leerfeld 63 kein Sender auswählbar ist. Die einzelnen Teilfelder und das Suchfeld sind ineinander jeweils durch einen Übergangsbereich 64 getrennt. Eine in der Figur 4a nicht dargestellte Anzeigemarke, z.B. ein Fadenkreuz, ist über das Bedienfeld mittels des Bedienelements 2 bewegbar. Durch einen starken Druck auf das Bedienelement 2 oder durch eine Betätigung der dritten Taste 23 ist das Bedienfeld auswählbar, über dem sich gerade die Anzeigemarke befindet. Ferner ist es auch möglich, statt der Anzeigemarke ein ausgewähltes Feld durch eine inverse, eine blinkende oder eine farblich veränderte Darstellung hervorzuheben.

In den Figuren 4c und 4d ist eine Ansteuerungsvorschrift zu dem in der Figur 4a dargestellten Bedienfeld 60 entlang der Linie IV dargestellt. Die gesamte Ansteuerungsvorschrift legt für jeden Punkt des Bedienfeldes 60 entsprechende Kräfte fest. Auf einer y-Achse 70 ist die Kraft aufgetragen, die einer Bewegung des Bedienelements bei einer Bewegung der Anzeigemarke in der durch die Linie IV in der Figur 4a gezeigten Linie entgegenwirkt. Hierbei ist in der Figur 4c die Kraft bei einer Bewegung in der Richtung von dem zweiten Teilfeld 61' in Richtung der ersten Senderstationstaste über einer entsprechenden Position des Bedienelements 2 aufgetragen. In der Figur 4d ist die wirkende Kraft in der entgegengesetzten Richtung aufgetragen. Außerhalb des Bedienfeldes 60 wird durch die Aktoren 3, 3` gegen die Bewegung eine Kraft ausgeübt, die die äußere Kraft ausgleicht und eine Sperrung des Bedienelements bewirkt, sofern ein Benutzer durch eine Betätigung den Rand des Bedienfeldes 60 erreicht. Innerhalb der Teilfelder 61, 61` wirkt jeweils nur eine sehr geringe Kraft gegen eine Bewegung des Bedienelements, die ein zufälliges Bewegen des Bedienelements verhindert, z.B. durch Erschütterungen bei einer Verwendung im Fahrzeug. In einem Übergangsbereich 64 zwischen den Bedienfeldern wirkt jeweils eine mittlere Kraft gegen eine Bewegung, so dass ein Benutzer bei einem Wechsel von dem ersten Teilfeld 61 zu dem zweiten Teilfeld 61` einen Übergang bemerkt und er, ohne die Anzeige 18 zu betrachten, eine taktile Rückkopplung für einen Wechsel des ausgewählten Bedienfeldes erhält. Eine derartige Ansteuerungsvorschrift für das Bedienfeld ist sowohl für die in der Figur 4a gezeigte Richtung als auch für die hierzu senkrecht verlaufende Richtung von dem ersten Teilfeld 61 beziehungsweise 61` zu dem Suchfeld 62 in dem Speicher 9 abgelegt. Wird nun über eine Auswahl des Suchfeldes 62 ein neuer Sender gesucht, so wird dieser neue Sender anstelle des Leerfeldes 63 in einem weiteren Teilfeld 65 dargestellt, wie es in der Figur 4b gezeigt ist. Wird dieser neue Sender ausgewählt, so wird eine entsprechende Ansteuerungsvorschrift, die ausgehend von dem dritten Teilfeld 61`` eine Verschiebung der Anzeigemarke in das Leerfeld 63 gesperrt und von dem zweiten Teilfeld 61` einen direkten Zugang zu dem Suchfeld 62 ermöglicht hat, durch eine neue Ansteuerungsvorschrift ersetzt, in ein viertes Teilfeld als ein neues Teilfeld zur Senderwahl berücksichtigt wird. Diese Ansteuerungsvorschrift wird in dem Speicher 9 gespeichert und bei der Anzeige des in der Figur 4a beziehungsweise Figur 4b beschriebenen Senderauswahlmenüs zukünftig stets berücksichtigt, bis bei einer neuen Aufnahme von Sendern oder bei einem Löschen von Sendern eine neue Ansteuerungvorschrift gespeichert wird.

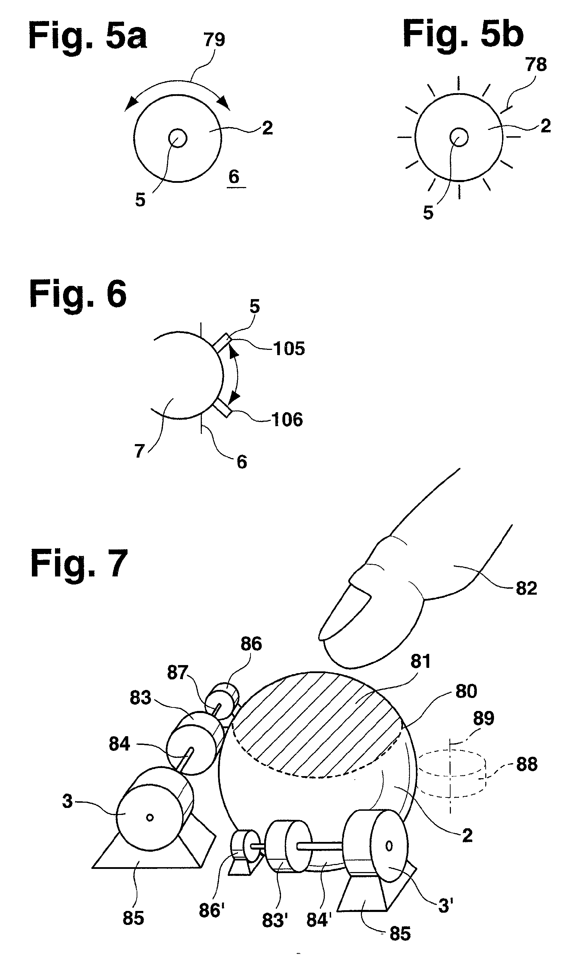

In der Figur 5a ist das Bedienelement 2 als ein Drehgeber geschaltet. Für diese Verwendung wird bei der Anordnung eines Stiftes 5 dieser in der Mitte des Bedienelements 2 zentriert, so dass ein Benutzer die dann durch den Stift 5 verlaufende Drehachse leicht erfühlen kann. Eine Bewegung des Bedienelements ist nur in die durch den Doppelpfeil 79 angegebenen Drehrichtungen möglich. Eine Verstellung ist dabei kontinuierlich möglich. Gemäß der Darstellung in der Figur 5b ist eine Gestaltung des Bedienelements als ein Drehgeber möglich, bei dem durch Striche einzelne Raststufen gekennzeichnet sind, zwischen denen ein Übergang ebenso realisiert ist, wie ein Übergang zwischen zwei Auswahlfeldern für Senderstationstasten in dem zweidimensionalen Bedienfeld 60 gemäß der Figur 4a. Wird das Bedienelement 2 als ein Drehgeber verwendet, so wird bei der Initialisierung mittels motorischem Antrieb der Stift in einer zentralen Position gegenüber der Oberfläche 6 eingestellt. Die in der Figur 5b anhand der Striche 78 gezeigten Raststufen sind von der jeweiligen Ansteuerungsvorschrift abhängig und damit veränderbar speicherbar. Stehen z.B. vier Größen zur Auswahl, so können vier Raststufen vorgeschrieben werden. Stehen zwölf Größen zur Auswahl, kann die Anzahl der Raststufen entsprechend auf zwölf erhöht werden, so dass insbesondere eine Anpassung der durch das Bedienelement 2 realisierten Raststufen an eine Darstellung in der Anzeige 18 möglich wird.

In der Figur 6 ist das Bedienelement 2 als ein Kippschalter dargestellt, bei dem der Stift 5 zwischen einer ersten Position 105 und einer zweiten Position 106 wechselbar ist.

Zwischen diesen beiden Positionen wirkt eine mittlere Gegenkraft gegen eine Bewegung in Richtung auf die erste Position 105 und die zweite Position 106. Außerhalb dieser Richtung und auch außerhalb des durch die Positionen 105, 106 beschriebenen Zwischenraums in Richtung auf die Oberfläche 6 wirkt eine starke Gegenkraft gegen eine auf das Bedienelement 2 gerichtete Kraft. Somit ist nur ein Umschalten zwischen der ersten Position 105 und der zweiten Position 106 möglich, da für alle anderen Positionen und Bewegungen das Bedienelement 2 durch eine starke Gegenkraft gesperrt wird.

In Abhängigkeit von dem vorzugsweise über die Bedieneinheit 19 ausgewählten, zu bedienenden Gerät ist das Bedienelement 2 als ein Schieberegler beziehungsweise als ein zweidimensionales Bedienfeld, wie in den Figuren 3a und 4a gezeigt, oder als Drehregler, wie in den Figuren 5a und 5b bedienbar. Jedoch können auch beliebige andere Bedienelemente mit beliebigen Schaltwegen realisiert werden. Für eine Bedienung ist jeweils die geeignete Ansteuerungsvorschrift zu wählen, durch die den Stellungen des Bedienelements 2 Funktionen und Parameter zugewiesen werde und in denen die die auf das Bedienelement 2 mittels der Aktoren 3, 3' wirkenden Kräfte positionsabhängig festgelegt sind. Hierbei ist es möglich, für die Bedienung eines Autoradios z.B. Schieberegler und zweidimensionale Bedienfelder vorzusehen, während die Bedienung eines Navigationsgeräts über einen Drehgeber mit Raststufen gemäß der Figur 5b erfolgt und eine Klimaregelung über einen Drehgeber ohne Raststufen gemäß der Figur 5a festgelegt ist. Ein Benutzer der Bedienvorrichtung erhält damit schon bei der Bedienung eine Rückkopplung darüber, welches Gerät er bedient, ohne dass er hierfür die Anzeige 18 beachten muss. Über den Lautsprecher 24 kann eine ausgewählte Funktion mittels Sprachausgabe bestätigt werden, so dass der Benutzer eine akustische Rückkopplung über eine ausgewählte Gerätefunktion erhält. Entsprechend ist es auch möglich, ebenso wie für unterschiedliche Geräte auch für unterschiedliche Gerätefunktionen eines Gerätes, verschiedene Ansteuerungsvorschriften für das Bedienelement 2 zu verwenden, so dass auch hier eine taktile Erfassung für den Benutzer möglich ist, welche Gerätefunktionen gerade eingestellt bzw. verändert werden. Weiterhin ist es möglich, innerhalb des Bedienelements 2 einen elektrischen Kontakt für den Stift 5 vorzusehen, so dass eine Betätigung des Stiftes 5 die Funktion der dritten Taste 23, also eine Bestätigungsfunktion, übernehmen kann, so dass die Auswahl einer mittels des Bedienelements 2 angewählten Funktion durch einen Druck auf den Stift 5 vorzugsweise radial zu dem Körper des Bedienelements 2 erfolgen kann.

In der Figur 7 ist ein Ausführungsbeispiel für die Ansteuerung eines Bedienelements 2 dargestellt, das insbesondere für die Erfassung linearer Bewegungen des Bedienelements 2 geeignet ist. Durch eine gestrichelte Linie 80 ist ein schraffiert dargestellter Bereich 81 des Bedienelements 2 hervorgehoben, der über die Oberfläche 6 der Halterung 1 hinausragt und in dem das Bedienelement 2 über einen Benutzer mittels eines Fingers 82 bedienbar ist. Eine Ansteuerung des Bedienelements 2 erfolgt über ein erstes Haftrad 83 und ein zweites Haftrad 83`, die in einem Winkel von 90° zueinander angeordnet sind, an dem Bedienelement 2, das kugelförmig ausgeführt ist. Über eine Achse 84 ist das Haftrad, das z.B. aus Gummi gefertigt ist, mit dem Aktor 3 verbunden, der als eine Kombination aus Elektromotor und Wirbelstrombremse ausgeführt ist und in einem Polschuh 85 gelagert ist. Ferner ist an der Achse 84 ein Drehrichtungssensor 86 angeordnet. Ebenfalls sind die gleichen Bauteile Achse 84`, Aktor 3`, Polschuh 85` und Drehrichtungssensor 86` an dem zweiten Haftrad 83` angeordnet. Durch die rechtwinklige Anordnung der Hafträder 83, 83` zueinander ist eine zweidimensionale Bewegungserfassung des kugelförmigen Bedienelements 2 möglich.

In einem weiteren, in der Zeichnung nicht dargestellten Ausführungsbeispiel sind die Achsen 84, 84' und damit auch die Hafträder 83, 83' um 45° gegenüber dem in der Figur 7 dargestellten Verlauf gekippt, so dass auch Bewegungen um eine Drehachse erfassbar sind, die senkrecht zu den in der Figur 7 gezeigten Achsen 84, 84' verlaufen. Ferner ist eine Erfassung bzw. Ansteuerung des Bedienelements 2 mittels eines dritten Haftrades 88 möglich, das in der Figur 7 gestrichelt dargestellt ist, und das eine Drehachse 89 aufweist, die senkrecht zu den beiden Achsen 84, 84' verläuft. In einem bevorzugten Ausführungsbeispiel sind dabei entweder das erste Haftrad 83 und das zweite Haftrad 83' mit dem Bedienelement 2 verbunden oder das dritte Haftrad 88. Hierbei wird der erste Fall gewählt bei einer der Verwendung des Bedienelements zu einer linearen Verstellung als ein Schiebeschalter und der zweite Fall bei der Verwendung des Bedienelements als ein Drehschalter. Eine Unterbrechung des Kontakts zu den Hafträdern kann z.B. dadurch erreicht werden, dass die Achsen 84, 84', 89 jeweils von dem Bedienelement 2 entfernt werden.

## Patentansprüche

1. Bedienvorrichtung mit einer Bedieneinheit und mit einer Ansteuervorrichtung, **dadurch gekennzeichnet, dass** mit der Bedienvorrichtung mehrere Geräte (10, 13) und/oder mehrere Gerätefunktionen (11, 12, 24, 15) steuerbar sind, dass von der Ansteuervorrichtung (7) Kräfte auf das Bedienelement (2) ausübbar sind, dass die Kräfte in einer Ansteuerungsvorschrift festgelegt sind und dass jedes Gerät (10, 13) und/oder jede Gerätefunktion (11, 12, 14, 15) einer Ansteuerungsvorschrift zugeordnet ist.

2. Bedienvorrichtung nach Anspruch 1, **dadurch gekennzeichnet, dass** eine auf das Bedienelement (2) ausgeübte Kraft und/oder eine Bewegung des Bedienelements (2) messbar ist.

3. Bedienvorrichtung nach Anspruch 2, **dadurch gekennzeichnet, dass** bei einer zu starken äußeren Krafteinwirkung auf das Bedienelement (2) eine Warnung ausgebbar ist.

4. Bedienvorrichtung nach einem der vorhergehenden Ansprüche, **dadurch gekennzeichnet, dass** die auf das Bedienelement (2) mittels Aktoren (3, 3') übertragene Kraft gegen eine äußere auf das Bedienelement (2) wirkende Kraft gerichtet ist.

5. Bedienvorrichtung nach einem der vorhergehenden Ansprüche, **dadurch gekennzeichnet, dass** der Bedienvorrichtung eine Anzeige (18), vorzugsweise eine Bildschirmanzeige, zugeordnet ist.

6. Bedienvorrichtung nach Anspruch 5, **dadurch gekennzeichnet, dass** ein Steuerungselement (40, 60) in der Anzeige (18) anzeigbar ist dass dem Steuerungselement (40, 60) eine Ansteuerungsvorschrift zugeordnet ist.

7. Bedienvorrichtung nach einem der Ansprüche 5-6, **dadurch gekennzeichnet, dass** das Steuerungselement (40, 60) ein Bedienfeld mit einer Anzeigemarke (41) ist und dass mit Annäherung oder Erreichen eines Randes (43, 47) des Bedienfelds eine Kraft auf das Bedienelement entgegen einer Bewegung der Anzeigemarke (41) in Richtung auf den Rand des Bedienfelds (43, 47) gerichtet ist.

8. Bedienvorrichtung nach einem der vorhergehenden Ansprüche, **dadurch gekennzeichnet, dass** die für die Bedienung des Bedienelements (2) erforderlichen Kräfte in der Ansteuervorrichtung (7) berechenbar sind oder an die Ansteuervorrichtung (7) übertragbar sind.

9. Bedienvorrichtung nach einem der vorhergehenden Ansprüche, **dadurch gekennzeichnet, dass** das Bedienelement zumindest teilweise kugelförmig ausgebildet ist.

10. Bedienvorrichtung nach einem der vorhergehenden Ansprüche, **dadurch gekennzeichnet, dass** eine Kraft auf das Bedienelement (2) über Hafträder (3, 3', 83, 83', 88) übertragbar ist.

11. Bedienvorrichtung nach einem der vorhergehenden Ansprüche, **dadurch gekennzeichnet, dass** eine Beweglichkeit des Bedienelements (2) mechanisch begrenzt ist.

12. Bedienvorrichtung nach einem der vorhergehenden Ansprüche, **dadurch gekennzeichnet, dass** eine Fehlfunktion des Geräts (10, 13) ermittelbar ist und dass das Bedienelement (2) bei einer Fehlfunktion automatisch bewegbar ist.

13. Bedienvorrichtung nach einem der vorhergehenden Ansprüche, **dadurch gekennzeichnet, dass** eine Bewegung des Bedienelements (2) sperrbar ist.

14. Bedienvorrichtung nach einem der vorhergehenden Ansprüche, **dadurch gekennzeichnet, dass** das Bedienelement (2) automatisch, vorzugsweise motorisch, in eine vorgebbare Stellung bringbar ist.

15. Elektrisches Gerät mit einer Bedienvorrichtung nach einem der vorhergehenden Ansprüche.

16. Verwendung einer Bedienvorrichtung nach einem der vorhergehenden Ansprüche in einem Kraftfahrzeug.
